# EUROPEAN PATENT SPECIFICATION

(11) **EP 2 613 509 B1**
(45) Date of publication and mention of the grant of the patent: **07.03.2018**
(21) Application number: 13150551.3
(22) Date of filing: 08.01.2013
(51) Int. Cl.: H04M 1/725, G06F 3/0482, G06F 3/0485

(54) **Graphical user interface, display apparatus and control method thereof**
Grafische Benutzerschnittstelle, Anzeigevorrichtung und Steuerverfahren dafür
Interface utilisateur graphique, appareil d'affichage et son procédé de commande

(30) Priority: 09.01.2012 KR 20120002519
(43) Date of publication of application: 10.07.2013
(73) Proprietor: Samsung Electronics Co., Ltd., Gyeonggi-do 16677 (KR)
(72) Inventor: Lee, Dong-heon, Seoul (KR); Kim, Yoo-tai, Gyeonggi-do (KR); Suh, Ji-woo, Seoul (KR); So, Yong-Jin, Seoul (KR); Yu, Seung-dong, Gyeonggi-do (KR)
(74) Representative: Taor, Simon Edward William

(56) References cited:
- WO-A2-2009/143076
- US-A1- 2010 281 374
- US-A1- 2011 138 329
- US-A1- 2011 161 866
- US-A1- 2011 225 545
- Apple Inc.: "iPod touch Benutzerhandbuch für iPhone OS 3.1 Software", , 30 September 2009 (2009-09-30), XP55062375, Retrieved from the Internet: URL:http://manuals.info.apple.com/de_DE/iP od_Touch_3.1_Benutzerhandbuch.pdf [retrieved on 2013-05-08]
- Chbok: "Scrolling Menus", Mozilla Developer Network>Docs>Scrolling Menus, 17 August 2007 (2007-08-17), pages 1-2, XP055009185, Retrieved from the Internet: URL:https://developer.mozilla.org/index.ph p?title=en/XUL_Tutorial/Scrolling_Menus&re vision=13 [retrieved on 2011-10-11]

## Description

Apparatuses and methods consistent with the exemplary embodiments relate to a graphical user interface, a display apparatus and a control method thereof which displays an image of various objects, and more particularly, to a graphical user interface, a display apparatus and a control method thereof which controls a display method of an object image corresponding to a user's manipulation.

A display unit of a display apparatus has such size and resolution to display and support an image. Due to such features, the display unit may not display thereon an entire image of a predetermined object. For example, if an object includes a plurality of pages, only one of which may be displayed at a time on the display unit. In this case, the remaining pages other than the displayed page are not displayed on the display unit and are hidden. The display apparatus may then provide a scrollable object so that the remaining pages of the object which have not been displayed may be displayed upon scrolling.

For example, a user may scroll the object through a remote controller, etc., and accordingly the display apparatus sequentially or by stages displays a hidden area of the object according to the scrolling operation.

Apple Inc's iPod Touch iOS 3.1 Software manual discloses a tabbed browsing system in which tabs are selected by pressing a button and then selecting a required tab.

According to an aspect of an exemplary embodiment, there is provided a display apparatus as set out in claim 1.

The UI screen portion may comprise the entire image displayed on the display, or a portion thereof.

The controller may control the image processor to display the UI screen portion including the object of the first group and at least a part of the object of the second group in response to the first command.

The UI screen portion including the object of the first group and the UI screen portion including the object of the second group may be reduced in size at a same rate (and/or a same amount).

In response to a command to discontinue scrolling the UI screen portion, the UI screen portion including the object of the second group may be enlarged and displayed in the same size as the original size of the UI screen portion including the object of the first group.

The command to discontinue scrolling the UI screen portion may include at least one of a user input to discontinue scrolling the UI screen portion, absence of a user input for predetermined time after the first command is received, and a command selecting one of the objects in the UI screen portion.

The first command may include a user selection of an area of the UI screen portion in which an object is not displayed, and the command to scroll the UI screen portion may include a user input indicating a scrolling direction.

The image processor may display a plurality of UI screen portions, and the controller may independently scroll the plurality of UI screen portions.

According to an aspect of another exemplary embodiment, there is provided a control method of a display apparatus as set out in claim 9.

The reducing the size of the UI screen portion may include displaying the UI screen portion including the object of the first group and at least a part of the object of the second group in response to the first command.

The UI screen portion including the object of the first group and the UI screen portion including the object of the second group may be reduced in size at a same rate (and/or a same amount).

In response to a command to discontinue scrolling, the UI screen portion including the object of the second group may be enlarged and displayed in the same size as the original size of the UI screen portion including the object of the first group.

The command to discontinue scrolling the UI screen portion may be a user input to discontinue scrolling the UI screen portion, absence of a user input for a predetermined time after the first command, or a command selecting one of the objects in the UI screen portion.

The first command may include a user selection of an area of the UI screen portion in which an object is not displayed, and the command to scroll the UI screen portion may include a user input indicating a scrolling direction.

The above and/or other aspects will become apparent and more readily appreciated from the following description of exemplary embodiments, taken in conjunction with the accompanying drawings, in which:
FIG. 1 illustrates an example of a display system according to an exemplary embodiment;
FIG. 2 is a block diagram of a display apparatus of the display system in FIG. 1 according to an exemplary embodiment;
FIG. 3 illustrates an example of scrolling an object that is displayed on a display unit of the display apparatus in FIG. 2 according to an exemplary embodiment;
FIG. 4 illustrates an example of an object image at an initial stage in the display apparatus in FIG. 2 according to an exemplary embodiment;
FIG. 5 illustrates an example of an object image that is reduced corresponding to a preset event from the image in FIG. 4 according to an exemplary embodiment;
FIG. 6 illustrates an example of reducing and displaying an object image in a different method than in FIG. 5 according to an exemplary embodiment;
FIG. 7 is a control flowchart of a control method of the display apparatus in FIG. 2 according to an exemplary embodiment;
FIG. 8 illustrates an example of a user interface (UI) screen portion at an initial stage in a display apparatus according to another exemplary embodiment;
FIG. 9 illustrates an example of a UI screen portion that is reduced and displayed from the state in FIG. 8 according to an exemplary embodiment;
FIG. 10 illustrates an example of a UI screen portion that is scrolled from the state in

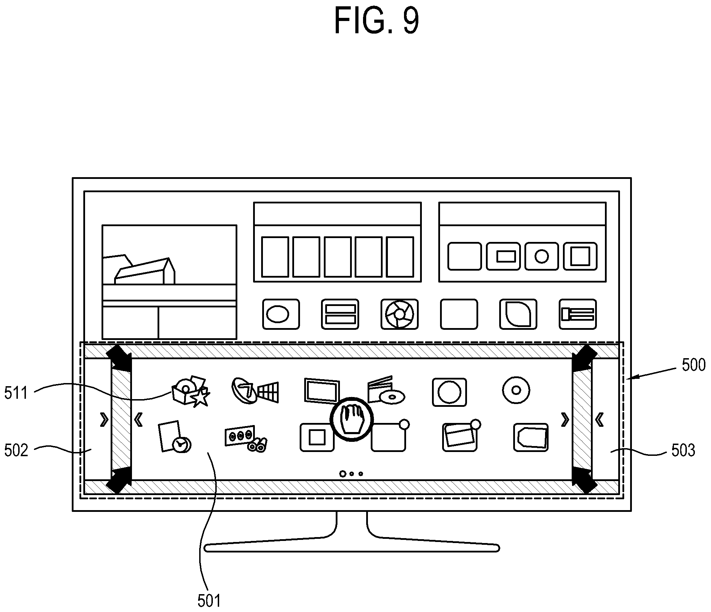

FIG. 9 according to an exemplary embodiment; and

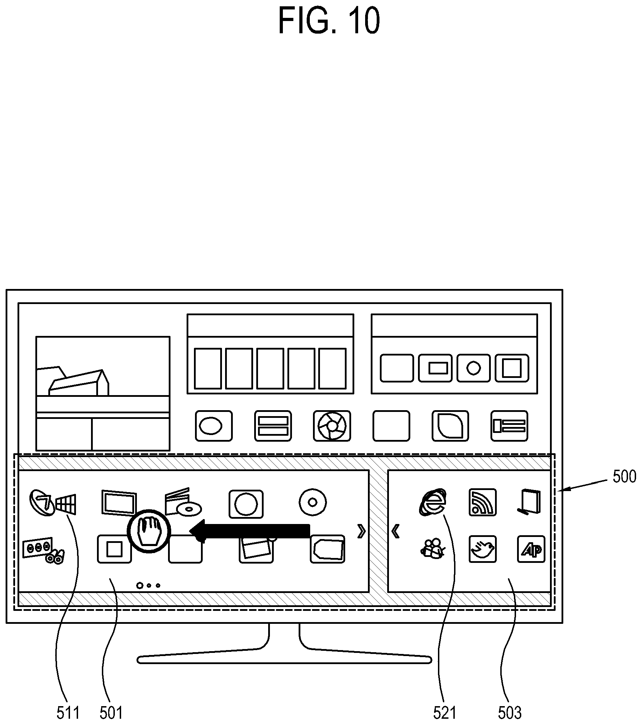

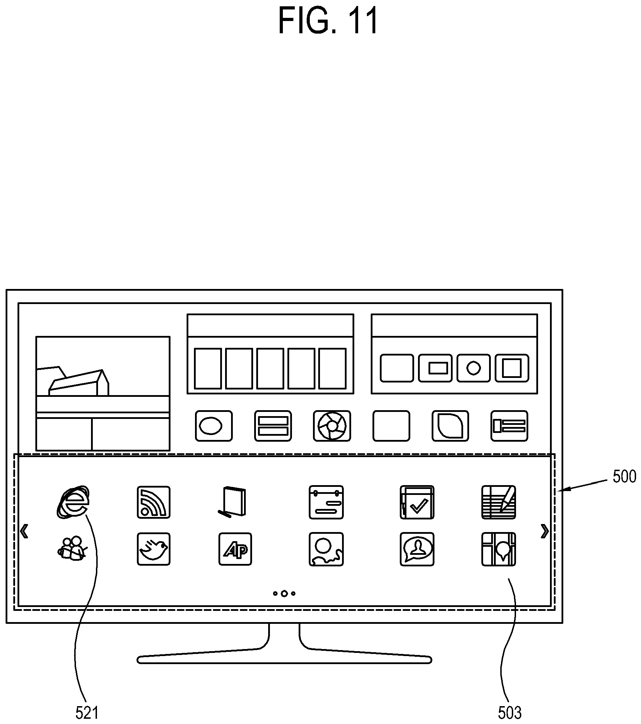

FIG. 11 illustrates an example of a UI screen portion that is restored to its original size from the state in FIG. 10 according to an exemplary embodiment.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

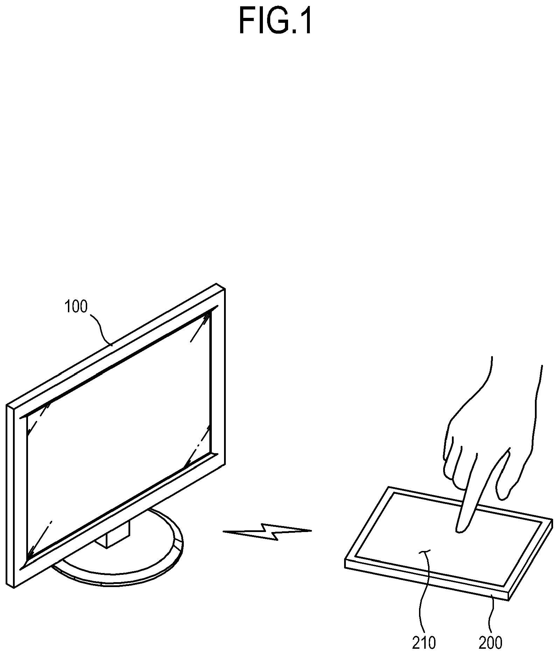

FIG. 1 illustrates an example of a display system according to an exemplary embodiment.

As shown in FIG. 1, the display system according to exemplary embodiment includes a display apparatus 100 which processes an image signal according to a preset process and displays the image signal as an image on a screen; and an input device 200 which generates and transmits a preset command, data, information and/or signal to the display apparatus 100 to remotely control an operation of the display apparatus 100.

The display apparatus 100 may be a television (TV) which displays an image based on an image signal, image data and/or image information that is supplied by an external image supply source (not shown) or stored in memory of the display apparatus 100, and the input device 200 may be a remote controller.

However, the inventive concept may also apply to different configurations of the display apparatus 100 and the input device 200. For example, the display apparatus 100 may be a monitor connected to a computer, etc., and the input device 200 may be a touchpad, a touchscreen integrated with a monitor, a mouse, a keyboard, or other device which communicates with the display apparatus 100 and is manipulated by a user. That is, exemplary embodiments which will be described hereinafter are exemplary embodiments which are variants depending on an embodiment of a system, but the inventive concept is not limited thereto.

The display apparatus 100 may display a video, still image, applications, on screen display (OSD), a graphic user interface (GUI) to control various operations, etc.

The input device 200 may be an external device which communicates with the display apparatus 100 using a wired connection, a wireless connection, over a network, etc. Alternatively, the input device 200 may be an internal device, such as a touch screen integrated with the display apparatus 100 or the touchpad of a notebook computer which includes the display apparatus 100. The input device 200 transmits commands to the display apparatus 100 corresponding to a user's manipulation.

The input device 200 generates various preset commands (for example, commands corresponding to a user's touch to the touch pad 210 of FIG. 1) and transmits the generated command to the display apparatus 100. The display apparatus 100 performs a control operation corresponding to a command that is transmitted by the input device 200.

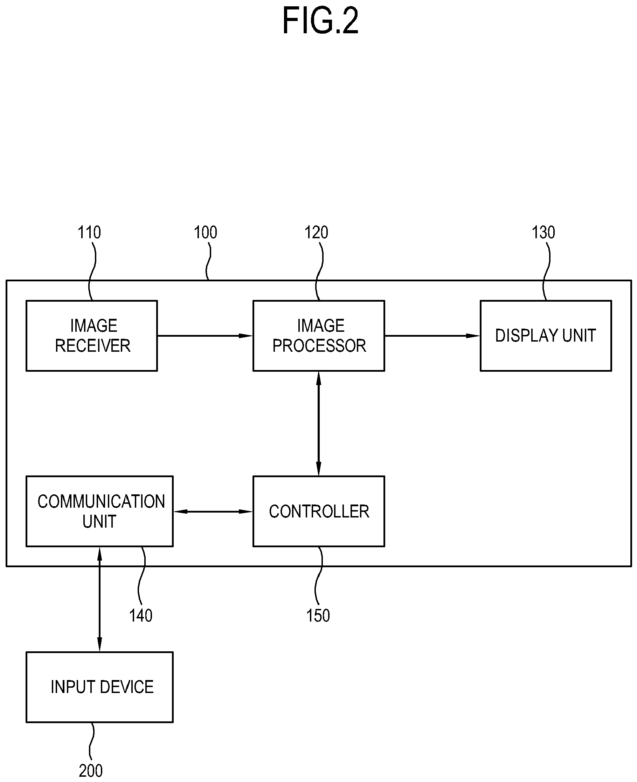

Hereinafter, a detailed configuration of the display apparatus 100 will be described with reference to FIG. 2. FIG. 2 is a block diagram of the display apparatus 100.

As shown therein, the display apparatus 100 includes an image receiver 110 which receives an image signal, an image processor 120 which process an image signal received by the image receiver 110, a display unit 130 which displays an image by using the image signal processed by the image processor 120, a communication unit 140 which communicates with the input device 200, and a controller 150 which controls general operations of the display apparatus 100. The image processor 120 and the controller 150 may be embodied as a hardware processor configure to execute operations.

The image receiver 110 receives an image signal from an image supply source (not shown) and transmits the image signal to the image processor 120. The image receiver 100 may receive the image signal using a wired connection, a wireless connection, over a network, etc. The image signal may be any type of image signal, including high definition multimedia interface (HDMI), DisplayPort, IEEE 1394 ("FireWire"), composite video, component video, S-Video, Digital Visual Interface, Video Graphics Array (VGA), etc. The image receiver 110 may also receive an image data packet stream from, for example, another device on the same network or from a streaming server (not shown).

The image processor 120 performs various image processing operations with respect to an image signal that is transmitted by the image receiver 110. The image processor 120 outputs the processed image signal to the display unit 130, on which an image is displayed based on the image signal.

The image processor 120 may perform various image processing operations including a decoding operation corresponding to an image format of an image signal, a de-interlacing operation to convert an interlace image signal into a progressive image signal, a scaling operation to adjust an image signal to a preset resolution, a noise reducing operation to improve an image quality, a detail enhancement and conversion of a frame refresh rate, but not limited thereto.

The image processor 120 may be a system-on-chip which integrates various functions or an image processing board (not shown) in which independent elements performing each of the foregoing operations are installed.

The display unit 130 displays an image thereon based on an image signal that is output by the image processor 120. The display unit 130 may include various displays such as a liquid crystal display, a plasma display panel, a light-emitting diode display, an organic light-emitting diode display, a surface-conduction electron-emitter display, a carbon nano-tube display, a nano-crystal display, but not limited thereto.

The display unit 130 may further include additional elements according to its embodiment. For example, if the display unit 130 includes liquid crystal, the display unit 130 includes a liquid crystal display panel (not shown), a backlight unit (not shown) emitting light to the liquid crystal display panel, and a panel driving substrate (not shown) driving the panel. Other types of display unit 130 may include other additional elements.

The communication unit 140 transmits commands/data/information/signals received from the input device 200 to the controller 150. The communication unit 140 may also transmit commands/data/information/signals received from the controller 150 to the input device 200. The communication unit 140 may communicate using a wireless connection (for example, using a wireless communication protocol such as radio frequency (RF), Zigbee, Bluetooth, etc.) a wired connection, over a network, etc.

The controller 150 controls an operation of the display apparatus 100 corresponding to commands received by the communication unit 140. For example, upon receiving a preset command from the input device 200 through the communication unit 140, the controller 150 controls the image processor 120 to perform an image processing operation corresponding to the command. According to the present exemplary embodiment, the controller 150 and the image processor 120 are provided as separate elements, but may otherwise be provided as a single image processing board (not shown).

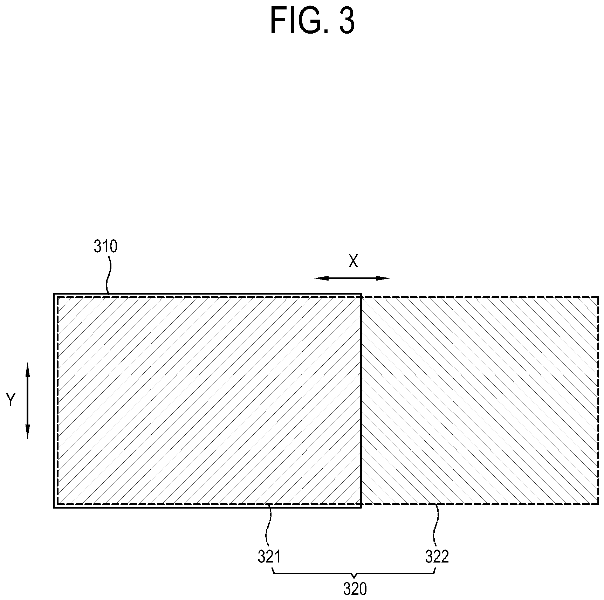

With the foregoing configuration, an example of displaying an image of a predetermined object 320 on the display unit 130 by the image processor 120 will be described with reference to FIG. 3. FIG. 3 illustrates an example of scrolling the object 320 that is displayed on the display unit 130.

According to the present exemplary embodiment, the object 320 generally refers to an object that is displayed as an image, but not limited to a certain type. For example, the object 320 may include a web page, a user interface (UI), etc. The object 320 may be divided into a plurality of parts (for example, a plurality of pages) or may linearly extend in a certain direction.

Alternatively, the image processor 120, the communication unit 140 and the controller 150 may be embodied in a computing device without an integrated display unit or image receiver. In such an instance, the image processor 120 may output an image signal to an external display unit using a wired or wireless connection, over a network, etc.

As shown in FIG. 3, a display area 310 is an area in which an image is displayed on the display unit 130. That is, in an entire area of the object 320, a first area 321 is an area that is currently displayed as an image. In the entire area of the object 320, a second area 322 which is outside of the display area 310 and is adjacent to the first area 321 is an area that is not currently displayed as an image.

To display the second area 322 of the object 320 as an image, object 320 must be moved until the second area 322 is inside of the display area 310. An operation of moving the object 320 to display the second area 322, which is not currently displayed, as an image is referred to as a scroll operation, and the aforementioned state of the object 320 is referred to as a scrollable state.

If a command is transmitted to the communication unit 140 by the input device 200 (manipulated by a user) to perform a scroll operation, the controller 150 controls the image processor 120 to perform a scroll operation so that the second area 322 is located within the display area 310.

With reference to FIG. 3, a transverse direction of the display area 310 will be referred to as an X direction and a vertical direction will be referred to as a Y direction. As shown therein, if a vertical height of the object 320 corresponds to a vertical height of the display area 310 and a transverse width of the object 320 is wider than a transverse width of the display area 310, the scroll operation for the object 320 is performed in the X direction.

If a vertical height of the object 320 is larger than the vertical height of the display area 310 and a transverse width of the object 320 corresponds to the transverse width of the display area 310, the scroll operation for the object 320 may be performed in the Y direction.

If both the transverse width and the vertical height of the object 320 are larger than the display area 310, the scroll operation for the object 320 may be performed in both the X direction and the Y direction. This may cause inconvenience for a user's manipulation. With respect to an image of the object 320 that is displayed, a user may not easily recognize whether the object 320 is scrollable, depending on the content of the object 320.

For example, if the object 320 includes a plurality of icon images to execute various applications/functions/settings, a user may not easily recognize whether all icon images are displayed in the image of the object 320 that is currently displayed. That is, as the plurality of icon images is spaced from each other at a predetermined interval within the object 320, a user may not recognize that there is the second area 322 including other icon images since he/she views only the icon image in the first area 321 that is currently displayed.

In consideration of the foregoing, the display apparatus 100 according to the present exemplary embodiment may employ a following configuration.

If a preset command is received through the communication unit 140 while the first area 321 of the object 320 that is scrollable is displayed on the display unit 130, the controller 150 controls the image processor 120 to reduce the size of the object 320 in a scroll direction to display the first area 321 and at least a part of the second area 322 of the object 320 corresponding to the command.

Accordingly, a user may easily recognize that the currently-displayed object 320 is scrollable.

As the controller 150 reduces the size of the object 320 in the scroll direction, a user may easily recognize a direction in which the object 320 is scrollable.

For example, as in FIG. 3, based on the display area 310, the controller 150 reduces the size of the object at a preset rate in the X direction, and does not reduce the size of the object 320 in the Y direction. This indicates to the user that the object 320 is scrollable in the X direction. Alternatively, if the object 320 is scrollable in the Y direction, the controller reduces the size of the object 320 in the Y direction to indicate to the user that the scroll direction of the object 320 is the Y direction.

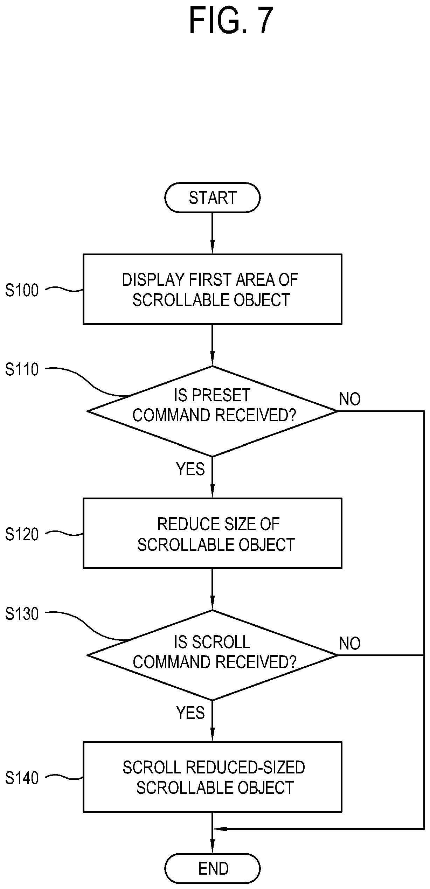

As discussed below with reference to FIGS. 7 through 11, according other exemplary embodiments, the object may be reduced in size in all directions rather than only in the scrollable direction.

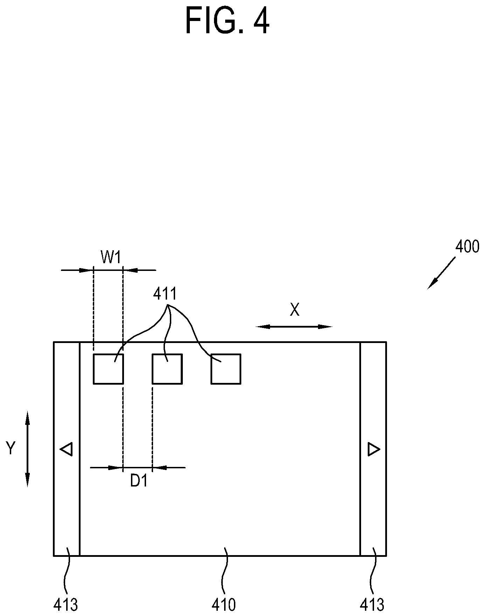

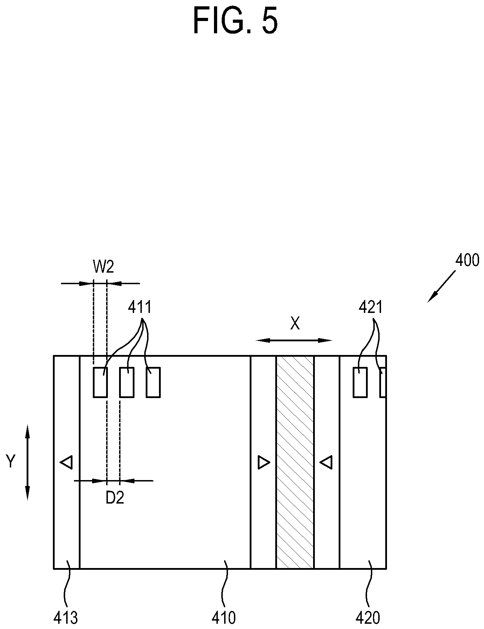

Hereinafter, an example of reducing and displaying a scrollable object 400 according to exemplary embodiments will be described with reference to FIGS. 4 and 5. FIG. 4 illustrates an example of an image of the object 400 in an initial state. FIG. 5 illustrates an example of an image of the object 400 that is reduced in size and displayed corresponding to a preset event.

The object 400 shown in FIGS. 4 and 5 includes a plurality of pages 410 and 420 which include a plurality of icon images 411 and 421, respectively. Such configuration of the object 400 is an exemplary embodiment, and does not limit the inventive concept. The content and configuration of the object 400 may vary.

An area in which the object 400 is displayed on the display unit 130 may include an entire display area or a part of the display area of the display unit 130. The latter case may be realized if the configuration according to the present exemplary embodiment applies to one of the plurality of objects which are displayed together.

As shown in FIG. 4, the image processor 120 displays on the display unit 130 an image of a page 410 including a plurality of icon images 411, of the object 400. The image of the page 410 may include an additional scrolling object 413 which a user may select to scroll the object 400 in a scroll direction. A user, however, may not recognize the scrolling object 413. In this case, a user may not recognize whether the currently displayed object 400 is scrollable or its scroll direction is the X direction or the Y direction.

Then a user may manipulate the input device 200 to transmit a command to the display apparatus 100 from the input device 200. The configuration for generating the command by the input device 200 may vary. For example, the input device 200 may generate a particular command when a user is not in contact with a predetermined location of the touch pad 210 of the input device 200 for preset time after he/she has touched or tapped the predetermined location.

Otherwise, the input device 200 may generate a particular command if a user pushes a particular button among a plurality of buttons.

As shown in FIG. 5, the controller 150 reduces the size of the object 400 in the X direction upon receiving the command. The size reduction rate of the object 400 is determined corresponding to the received command. For example, such rate may be determined corresponding to the time during which a user is not in contact with the touch pad 210 of the input device 210 after the user has touched the touch pad 210 or the pushing time for the button of the input device 200. That is, the controller 150 reduces by stages the object 400 corresponding to the time during which the command is received.

As the object 400 is reduced in size and displayed, the page 420 of the object 400 and a part of the icon 421 included in the page 420 that were not visible in FIG. 4 are displayed. Then, a user may recognize that the object 400 is scrollable, via the image in FIG. 5.

The reduction in size of the object 400 is performed in the scroll direction. If the object 400 is scrollable in the X direction, the controller 150 reduces a width of the object 400 in the X direction instead of reducing the height of the object 400 in the Y direction that is perpendicular to the X direction.

As the object 400 is reduced in size, the width of the pages 410 and 420 and the icons 411 and 421 in the X direction are reduced in size. If the width of the image of the icon 411 in the page 410 is referred to as W1 and a distance between images of the two icons 411 that are adjacent to each other in the X direction in an initial state (refer to FIG. 4) is referred to as D1, the width W1 is reduced in size to W2 and the distance D1 is reduced in size to D2 at a preset reduction rate. The width W1 is wider than the width W2 and the distance D1 is longer than the distance D2. The ratio of the width W2 to the width W1 and the ratio of the distance D2 to the distance D1 correspond to the reduction rate.

A user may view the pages 410 and 420 reduced in size in the X direction and recognize that the object 400 is scrollable in the X direction. Then a user may manipulate the display apparatus 100 to perform a scroll operation in the X direction through the input device 200. For example, a user touches the touch pad 210 and moves his/her fingertip in the scroll direction to transmit the scroll movement command to the display apparatus 100 from the input device 200.

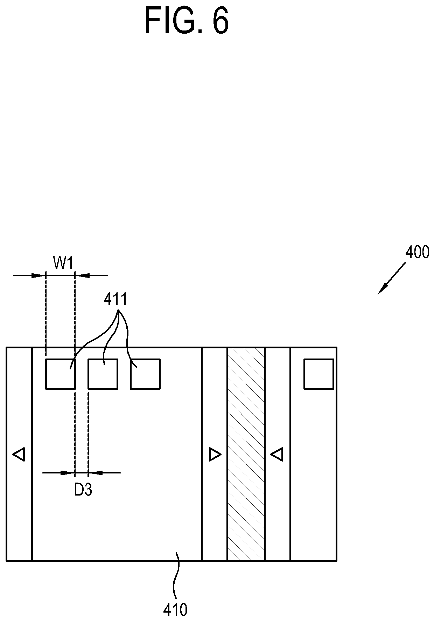

The reducing the size of the object is not limited to the example described with reference to FIG. 5. Other exemplary embodiments will be described with reference to FIG. 6.

As shown in FIG. 6, if a width of an image of an icon 411 in the page 410 is referred to as W1 and a distance between images of two icons 411 that are adjacent to each other in the X direction in the initial state (refer to FIG. 4) is referred to as D1, the controller 150 reduces the distance D1 to a distance D3 but does not adjust the width W1 of the images of the icons 411.

That is, if the object includes a plurality of sub-objects, the width of the entire object including the width and distance of the plurality of sub-objects may be reduced in size in the scroll direction or only the distance between the plurality of sub-objects may be reduced in size. Alternatively, in some embodiments, the plurality of sub-objects may remain unchanged, as the object is reduced in size.

If an input that is input by the input device 200 through the communication unit 140 is not performed for preset time or a preset restoration command is received while the object has been reduced in size and displayed as in FIGS. 5 and 6, the controller 150 restores the object 400 to an original size and displays the restored object 400.

Hereinafter, a control method of the display apparatus 100 according to the present exemplary embodiment will be described with reference to FIG. 7. FIG. 7 is a flowchart of the control method of the display apparatus 100.

As shown therein, the display apparatus 100 displays a first area of a scrollable object (S100).

Upon receiving the preset command from the input device 200 (S110), the display apparatus 100 reduces the size of the object either in all dimensions or only in the dimension(s) which are scrollable (S120). If the display apparatus 100 reduces the size of the object in the dimension(s) which are scrollable, the display apparatus 100 reduces the width of the object that is in parallel with the scrollable direction and displays the reduced-sized object.

Upon receiving a scroll command from the input device 200 (S130), the display apparatus 100 scrolls the reduced-sized object in the scrollable direction (S140).

By the method described above, the display apparatus 100 may enable a user to recognize whether the object is scrollable and/or which direction is the scroll direction.

Alternatively, the method described above may be executed by a computing device without an integrated display unit. In such an instance, the computing device may output an image signal to an external display unit using a wired connection, a wireless connection, over a network, etc.

The above-described method may also be embodied in a computer-executable program stored on a computer-readable storage medium. A computer-readable storage medium may be is any data storage device that can store data that can be thereafter read by a computer system. Examples of the computer-readable storage medium include read-only memory (ROM), random-access memory (RAM), CD-ROMs, magnetic tapes, floppy disks, and optical data storage devices. The computer-readable storage medium can also be distributed over network-coupled computer systems so that the computer-readable code is stored and executed in a distributed fashion. The computer-executable program may be executed using a processor or microprocessor.

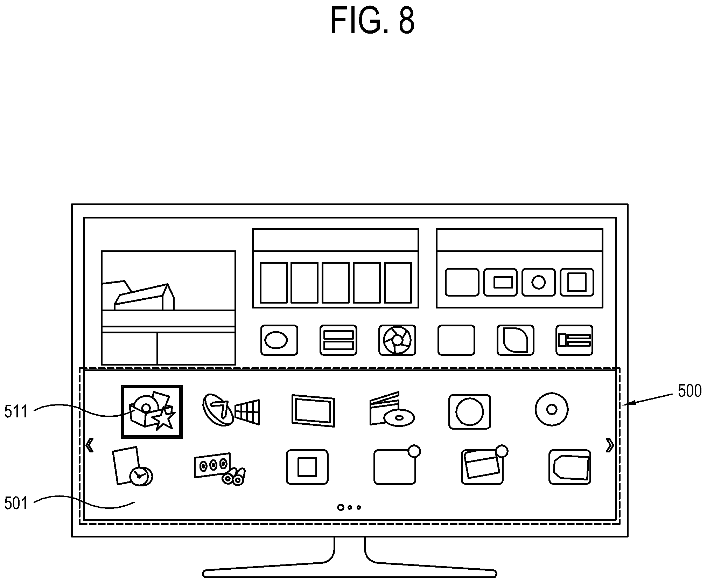

Other exemplary embodiments will be described with reference to FIGS. 8 to 12.

FIG. 8 illustrates an example of a user interface (UI) screen portion 500 in an initial state in a display apparatus 100 according to exemplary embodiments. FIG. 9 illustrates an example of a UI screen portion 500 that has been reduced in size from the state in FIG. 8. FIG. 10 illustrates an example of a UI screen 500 that is scrollable. FIG. 11 illustrates an example of a UI screen portion 500 that has been restored to its original size from the state in FIG. 10. In other embodiments, the UI screen portion 500 can remain the same size, with one or more objects in the UI screen portion 500 being reduced in size.

The image processor 120 may display the UI screen portion 500 in the entire displayable area on the display unit 130 or a portion of the displayable area on the display unit 130. As shown in FIG. 8, the image processor 120 divides the displayable area of the display unit 130 into upper and lower parts and displays the UI screen portion 500 in the lower part.

The image processor 120 may divide the displayable area on the display unit 130 into any number of areas and may display different UI screen portions 500 in the plurality of areas. The controller 150 may individually/independently scroll the UI screen portion 500 for each area.

The UI screen portion 500 according to an exemplary embodiment may include a plurality of objects, including the object 511, which may be realized as items or icons. The plurality of objects may be formed into a plurality of groups, and the UI screen portion 500 may be formed as a plurality of pages including the objects of each group.

In FIG. 8, the UI screen portion 500 of a page 501 which includes the object 511 of a first group out of the plurality of objects is displayed.

A user may perform an input operation through the input device 200. For example, the user may click the area in which the object 511 is not displayed on the UI screen portion 500. Then, the input device 200 transmits a command for starting scroll of the screen to the display apparatus 100.

As shown in FIG. 9, if the command for starting scroll of the screen is input through the input device 200, the controller 150 reduces the size of the UI screen portion 500. The controller 150 may reduce the size of the UI screen portion 500 only in the direction in which the UI screen portion 500 is scrollable or, as shown in FIG. 9, the controller 150 may reduce the size of the UI screen 500 in all directions.

As the UI screen portion 500 is reduced in size, pages 502 and 503 of the UI screen portion 500 which have not been displayed in the initial state in FIG. 8, other than the page 501 including the object 511 of the first group displayed in the initial state in FIG. 8, are partially displayed. Then, a user may determine that the UI screen portion 500 is scrollable and in which direction the UI screen is scrollable.

While the UI screen portion 500 is reduced in size, a user may perform a preset input operation through the input device 200. For example, the user may designate a predetermined direction by clicking a direction key (not shown) or by touching and dragging a touch pad (not shown). Then, the input device 200 transmits to the display apparatus 100 a command for scrolling the screen including a direction in which the user wishes to scroll.

As shown in FIG. 10, the controller 150 scrolls the UI screen portion 500 that has been reduced and displayed, in a direction corresponding to a command that has been transmitted by the input device 200 to scroll the screen portion.

The UI screen portion 500 includes a first group of objects, including the object 511, displayed as part of the page 501, and a second group of objects, including an object 521, displayed as part of the page 503. As the UI screen portion 500 is scrolled, the page 503, including the object 521, is displayed. The objects displayed as part of the page 501 are different from the objects displayed as part of the page 503.

The page 503, including the object 521 of the second group, is reduced in size and displayed at the same rate (and/or a same amount) as the page 501, including the object 511 of the first group.

Then, the controller 150 may determine whether the input of the command for the scroll of the screen portion has ended. The ending of inputting of the scroll command may vary. For example, the controller 150 may determine that the input of the command has ended if there is no user input through the input device 200 for predetermined time after the scroll command has been input, if the input for selecting one of the objects, such as the object 511 or the object 521, has been performed through the input device 200 or the input for ending the scroll has been performed through the input device 200.

As shown in FIG. 11, the controller 150 restores the UI screen portion 500 including the object 521 of the second group of the page 503 to its original size if it is determined that the input of the scroll command has been ended. That is, the controller 150 increases the size of the UI screen portion 500 including the object 521 of the second group to the same size as the original size of the UI screen portion 500 including the object 511 of the first group of the page 501.

As described above, embodiments of the invention provide a display apparatus comprising: a display unit; an image processor arranged to generate a user interface (UI) screen portion for displaying on the display unit; and a controller arranged to control the image processor to display on the display unit the UI screen portion comprising a first object, to reduce the size of first object in response to a first command, and to display the UI screen portion comprising a second object in response to a command to scroll the UI screen portion.

In some embodiments, the first object within the UI screen portion is reduced in size in response to a first command. In other embodiments, the UI screen portion is reduced in size in response to a first command.

In some embodiments, the first object comprising a number of sub-objects (e.g. a page with icons). Such sub-objects could form a first group of objects. In such embodiments, when the first object (e.g. page) is reduced in size in response to a first command, the sub-objects (e.g. icons) can also be reduced in size. In other embodiments, when the first object (e.g. page) is reduced in size in response to a first command, the sub-objects (e.g. icons) may stay the same size. Though, in some such embodiments, the spacing between the sub-objects (e.g. icons) may be reduced as the first object (e.g. page) is reduced in size.

Likewise, the second object may comprise a number of sub-objects (e.g. a page with icons). Such sub-objects could form a second group of objects.

In other embodiments, the first object may be part of a page or suchlike (e.g. when the first object is an icon or suchlike). In such embodiments, when the first object is reduced in size the page (or suchlike) may either also be reduced in size or stay the same size. The same can apply to the second object if it comprises a number of sub-objects.

In some embodiments the UI screen portion partially fills the display on the display unit. In other embodiments, the UI screen portion fills the display.

The above-described exemplary embodiments may also be embodied in a graphical user interface for an electronic device which includes an image processor and a display unit.

Although a few exemplary embodiments have been shown and described, it will be appreciated by those skilled in the art that changes may be made in these exemplary embodiments without departing from the principles of the inventive concept, the range of which is defined in the appended claims.

## Claims

1. A display apparatus comprising:
a communication unit (140) arranged to communicate with an input device (200);
a display unit (130);
an image processor (120) arranged to process an object (400) of a user interface, UI, to be displayed on the display unit (130), the object comprising a first page (410) and a second page (420); and
a controller (150) arranged to control the image processor (120) to:
reduce a size of the object by reducing one of a width and a height of the object which is parallel to a scrollable direction and maintaining a size of the other of the width and the height of the object, in response to a first command received from the input device while the first page is displayed, the scrollable direction being a direction in which the object is scrollable, and
scroll from the first page to the second page to be displayed on the display unit in response to a second command received from the input device, the second command being to scroll the object in the scrollable direction.

2. The display apparatus according to claim 1, wherein the controller is arranged to control the image processor to display the object comprising the first page and at least a part of the second page.

3. The display apparatus according to claim 1 or 2, wherein the first page and the second page are reduced in size at a same rate when the object is reduced in size.

4. The display apparatus according to claim 3, wherein in response to a command to discontinue scrolling the object, the second page is enlarged and displayed in the same size as the original size of the first page;
optionally wherein the command to discontinue scrolling the object comprises at least one of a user input to discontinue scrolling the object, absence of a user input for predetermined time after the first command is received, and a command to select a page in the object.

5. The display apparatus according to any one of claims 1 to 4, wherein the first command comprises a user selection of an area of the object in which a page is not displayed, and the command to scroll the object comprises a user input indicating a scrolling direction.

6. The display apparatus according to any one of claims 1 to 5, wherein the image processor is arranged to display a plurality of pages and the controller is arranged to independently scroll each of the plurality of pages.

7. The display apparatus according to any one of claims 1 to 6, wherein the first page comprises a number of first icon images; and wherein in response to the first command the first icon images are reduced in size and/or a spacing between the first icon images is reduced.

8. A control method of a display apparatus comprising:
communicating with an input device (200)
displaying a UI comprising an object, the object comprising a first page and a second page;
reducing a size of the object by reducing one of a width and a height of the object which is parallel to a scrollable direction and maintaining a size of the other of the width and the height of the object in response to a first command received from the input device while the first page is displayed, the scrollable direction being a direction in which the object is scrollable; and
scrolling from the first page to the second page to be displayed in response to a second command received from the input device, the second command being to scroll the object in the scrollable direction.

9. The control method according to claim 8, wherein the reducing the size of the object comprises reducing a size of the first page and displaying the first page and at least a part of the second page.

10. The control method according to claim 8 or 9, wherein the first page and the second page are reduced in size at a same rate when the object reduces in size.

11. The control method according to claim 10, wherein in response to a command to discontinue scrolling the object, the second page is enlarged and displayed in the same size as the original size of first page;
optionally wherein the command to discontinue scrolling the object comprises at least one of a user input to discontinue scrolling the object, absence of a user input for predetermined time after the first command is received, and a command selecting a page in the object.

12. The control method according to any one of claims 8 to 11, wherein the first command comprises a user selection of an area of the object in which a page is not displayed, and the command to scroll the object comprises a user input indicating a scrolling direction.

13. The control method according to any one of claims 8 to 12, wherein the first page comprises a number of first icon images; and wherein in response to the first command the first icon images are reduced in size and/or a spacing between the first icon images is reduced.

## Patentansprüche

1. Anzeigevorrichtung, die Folgendes umfasst:
eine Kommunikationseinheit (140), die dazu angeordnet ist, mit einer Eingabevorrichtung (200) zu kommunizieren;
eine Anzeigeeinheit (130);
einen Bildprozessor (120), der dazu angeordnet ist, ein auf der Anzeigeeinheit (130) anzuzeigendes Objekt (400) einer Benutzerschnittstelle (UI) zu verarbeiten, wobei das Objekt eine erste Seite (410) und eine zweite Seite (420) umfasst; und
einen Kontroller (150), der dazu angeordnet ist, den Bildprozessor (120) dazu zu steuern:
als Reaktion auf einen ersten, von der Eingabevorrichtung empfangenen Befehl, während die erste Seite angezeigt wird, eine Größe des Objekts zu reduzieren, indem eine von einer Breite und einer Höhe des Objekts, die parallel zu einer zum Scrollen fähigen Richtung ist, reduziert wird, und eine Größe der anderen von der Breite und der Höhe des Objekts aufrechterhalten wird, wobei es sich bei der zum Scrollen fähigen Richtung um eine Richtung handelt, in der das Objekt gescrollt werden kann, und
als Reaktion auf einen zweiten von der Eingabevorrichtung empfangenen Befehl von der ersten auf der Anzeigeeinheit anzuzeigenden Seite zu der zweiten auf der Anzeigeeinheit anzuzeigenden Seite zu scrollen, wobei der zweite Befehl zum Scrollen des Objekts in der zum Scrollen fähigen Richtung ist.

2. Anzeigevorrichtung nach Anspruch 1, wobei der Kontroller dazu angeordnet ist, den Bildprozessor dazu zu steuern, das die erste Seite und mindestens einen Teil der zweiten Seite umfassende Objekt anzuzeigen.

3. Anzeigevorrichtung nach Anspruch 1 oder 2, wobei die Größe der ersten Seite und die Größe der zweiten Seite um ein gleiches Maß reduziert werden, wenn die Größe des Objekts reduziert wird.

4. Anzeigevorrichtung nach Anspruch 3, wobei als Reaktion auf einen Befehl, das Scrollen des Objekts zu unterbrechen, die zweite Seite vergrößert und in derselben Größe wie die ursprüngliche Größe der ersten Seite angezeigt wird;
wobei optional der Befehl zum Unterbrechen des Scrollens mindestens eines der Folgenden umfasst: eine Benutzereingabe zum Unterbrechen des Scrollens des Objekts, die Abwesenheit einer Benutzereingabe für eine vorausbestimmte Zeit, nachdem der erste Befehl empfangen wurde, und einen Befehl zum Auswählen einer Seite in dem Objekt.

5. Anzeigevorrichtung nach einem der Ansprüche 1 bis 4, wobei der erste Befehl eine Benutzerauswahl eines Bereichs des Objekts, in dem keine Seite angezeigt wird, umfasst und der Befehl zum Scrollen des Objekts eine eine Scroll-Richtung angebende Benutzereingabe umfasst.

6. Anzeigevorrichtung nach einem der Ansprüche 1 bis 5, wobei der Bildprozessor dazu angeordnet ist, eine Vielzahl von Seiten anzuzeigen, und der Kontroller dazu angeordnet ist, jeder der Vielzahl von Seiten unabhängig zu scrollen.

7. Anzeigevorrichtung nach einem der Ansprüche 1 bis 6, wobei die erste Seite eine Anzahl erster Symbolbilder umfasst; und wobei als Reaktion auf den ersten Befehl die Größe der ersten Symbolbilder reduziert wird und/oder ein Abstand zwischen den ersten Symbolbildern reduziert wird.

8. Steuerungsverfahren für eine Anzeigevorrichtung, das Folgendes umfasst:
Kommunizieren mit einer Eingabevorrichtung (200),
Anzeigen einer ein Objekt umfassenden UI, wobei das Objekt eine erste Seite und eine zweite Seite umfasst;
Reduzieren einer Größe des Objekts als Reaktion auf einen ersten von der Eingabevorrichtung empfangenen Befehl, während die erste Seite angezeigt wird, indem eine von einer Breite und einer Höhe des Objekts, die parallel zu einer zum Scrollen fähigen Richtung ist, reduziert wird, und eine Größe der anderen von der Breite und der Höhe des Objekts aufrechterhalten wird, wobei es sich bei der zum Scrollen fähigen Richtung um eine Richtung handelt, in der das Objekt gescrollt werden kann; und
Scrollen von der ersten anzuzeigenden Seite zu der zweiten anzuzeigenden Seite als Reaktion auf einen zweiten von der Eingabevorrichtung empfangenen Befehl, wobei der zweite Befehl zum Scrollen des Objekts in der zum Scrollen fähigen Richtung ist.

9. Steuerungsverfahren nach Anspruch 8, wobei das Reduzieren der Größe des Objekts das Reduzieren einer Größe der ersten Seite und das Anzeigen der ersten Seite und mindestens eines Teils der zweiten Seite umfasst.

10. Steuerungsverfahren nach Anspruch 8 oder 9, wobei die Größe der ersten Seite und die Größe der zweiten Seite um ein gleiches Maß reduziert werden, wenn die Größe des Objekts reduziert wird.

11. Steuerungsverfahren nach Anspruch 10, wobei als Reaktion auf einen Befehl, das Scrollen des Objekts zu unterbrechen, die zweite Seite vergrößert und in derselben Größe wie die ursprüngliche Größe der ersten Seite angezeigt wird;
wobei optional der Befehl zum Unterbrechen des Scrollens mindestens eines der Folgenden umfasst: eine Benutzereingabe zum Unterbrechen des Scrollens des Objekts, die Abwesenheit einer Benutzereingabe für eine vorausbestimmte Zeit, nachdem der erste Befehl empfangen wurde, und einen Befehl zum Auswählen einer Seite in dem Objekt.

12. Steuerungsverfahren nach einem der Ansprüche 8 bis 11, wobei der erste Befehl eine Benutzerauswahl eines Bereichs des Objekts, in dem keine Seite angezeigt wird, umfasst und der Befehl zum Scrollen des Objekts eine eine Scroll-Richtung angebende Benutzereingabe umfasst.

13. Steuerungsverfahren nach einem der Ansprüche 8 bis 12, wobei die erste Seite eine Anzahl erster Symbolbilder umfasst; und wobei als Reaktion auf den ersten Befehl die Größe der ersten Symbolbilder reduziert wird und/oder ein Abstand zwischen den ersten Symbolbildern reduziert wird.

## Revendications

1. Appareil d'affichage, comprenant :
une unité de communication (140) conçue pour communiquer avec un dispositif d'entrée (200) ;
une unité d'affichage (130) ;
un processeur d'image (120) conçu pour traiter un objet (400) d'une interface utilisateur (UI) à afficher sur l'unité d'affichage (130), l'objet comprenant une première page (410) et une seconde page (420) ; et
un contrôleur (150) conçu pour contrôler le processeur d'image (120) pour :
réduire une taille de l'objet en réduisant un paramètre parmi une largeur et une hauteur de l'objet qui est parallèle à un sens de défilement et en maintenant une taille de l'autre paramètre parmi la largeur et la hauteur de l'objet, en réponse à une première commande reçue du dispositif d'entrée pendant que la première page est affichée, le sens de défilement étant un sens dans lequel l'objet peut défiler, et
faire défiler de la première page à la seconde page à afficher sur l'unité d'affichage en réponse à une seconde commande reçue du dispositif d'entrée, la seconde commande servant à faire défiler l'objet dans le sens de défilement.

2. Appareil d'affichage selon la revendication 1, dans lequel le contrôleur est conçu pour contrôler le processeur d'image pour que celui-ci affiche l'objet comprenant la première page et au moins une partie de la seconde page.

3. Appareil d'affichage selon la revendication 1 ou 2, dans lequel la première page et la seconde page sont réduites en taille dans une même proportion quand l'objet est réduit en taille.

4. Appareil d'affichage selon la revendication 3, dans lequel en réponse à une commande d'interruption du défilement de l'objet, la seconde page est agrandie et affichée dans une taille identique à la taille d'origine de la première page ;
dans lequel éventuellement la commande d'interruption du défilement de l'objet comprend au moins une action parmi une entrée d'utilisateur pour interrompre le défilement de l'objet, l'absence d'une entrée d'utilisateur pendant une durée prédéterminée après la réception de la première commande, et une commande de sélection d'une page dans l'objet.

5. Appareil d'affichage selon l'une quelconque des revendications 1 à 4, dans lequel la première commande comprend une sélection d'utilisateur d'une zone de l'objet dans laquelle une page n'est pas affichée, et la commande de défilement de l'objet comprend une entrée d'utilisateur indiquant un sens de défilement.

6. Appareil d'affichage selon l'une quelconque des revendications 1 à 5, dans lequel le processeur d'image est conçu pour afficher une pluralité de pages, et le contrôleur est conçu pour faire défiler indépendamment chaque page de la pluralité de pages.

7. Appareil d'affichage selon l'une quelconque des revendications 1 à 6, dans lequel la première page comprend un certain nombre de premières images d'icône ; et dans lequel en réponse à la première commande, les premières images d'icône sont réduites en taille, et/ou un espacement entre les premières images d'icône est réduit.

8. Procédé de contrôle d'un appareil d'affichage, consistant à :
communiquer avec un dispositif d'entrée (200)
affichant une UI comprenant un objet, l'objet comprenant une première page et une seconde page ;
réduire une taille de l'objet en réduisant un paramètre parmi une largeur et une hauteur de l'objet qui est parallèle à un sens de défilement et en maintenant une taille de l'autre paramètre parmi la largeur et la hauteur de l'objet, en réponse à une première commande reçue du dispositif d'entrée pendant que la première page est affichée, le sens de défilement étant un sens dans lequel l'objet peut défiler ; et
faire défiler de la première page à la seconde page à afficher en réponse à une seconde commande reçue du dispositif d'entrée, la seconde commande servant à faire défiler l'objet dans le sens de défilement.

9. Procédé de contrôle selon la revendication 8, dans lequel la réduction de la taille de l'objet consiste à réduire une taille de la première page, et afficher la première page et au moins une partie de la seconde page.

10. Procédé de contrôle selon la revendication 8 ou 9, dans lequel la première page et la seconde page sont réduites en taille dans une même proportion quand l'objet est réduit en taille.

11. Procédé de contrôle selon la revendication 10, dans lequel en réponse à une commande d'interruption du défilement de l'objet, la seconde page est agrandie et affichée dans une taille identique à la taille d'origine de la première page ;
dans lequel éventuellement la commande d'interruption du défilement de l'objet comprend au moins une action parmi une entrée d'utilisateur pour interrompre le défilement de l'objet, l'absence d'une entrée d'utilisateur pendant une durée prédéterminée après la réception de la première commande, et une commande de sélection d'une page dans l'objet.

12. Procédé de contrôle selon l'une quelconque des revendications 8 à 11, dans lequel la première commande comprend une sélection d'utilisateur d'une zone de l'objet dans laquelle une page n'est pas affichée, et la commande de défilement de l'objet comprend une entrée d'utilisateur indiquant un sens de défilement.

13. Procédé de contrôle selon l'une quelconque des revendications 8 à 12, dans lequel la première page comprend un certain nombre de premières images d'icône ; et dans lequel en réponse à la première commande, les premières images d'icône sont réduites en taille, et/ou un espacement entre les premières images d'icône est réduit.
